# EUROPÄISCHE PATENTSCHRIFT

(11) **EP 0 657 044 B1**
(45) Veröffentlichungstag und Bekanntmachung des Hinweises auf die Patenterteilung: **07.02.1996**
(21) Anmeldenummer: 93917544.4
(22) Anmeldetag: 11.08.1993
(51) Int. Cl.: G06F 9/38, G06F 15/78

(54) **VERFAHREN ZUM BETRIEB EINES RECHNERSYSTEMS MIT MINDESTENS EINEM MIKROPROZESSOR UND MINDESTENS EINEM COPROZESSOR**
METHOD OF OPERATING A COMPUTER SYSTEM WITH AT LEAST ONE MICROPROCESSOR AND AT LEAST ONE COPROCESSOR
METHODE DE FONCTIONNEMENT D'UNE SYSTEME INFORMATIQUE COMPORTANT AU MOINS UN MICROPROCESSEUR ET AU MOINS UN COPROCESSEUR

(30) Priorität: 28.08.1992 DE 4228761
(43) Veröffentlichungstag der Anmeldung: 14.06.1995
(73) Patentinhaber: SIEMENS AKTIENGESELLSCHAFT, D-80333 München (DE)
(72) Erfinder: BUCHENRIEDER, Klaus, D-85521 Ottobrunn-Riemerling (DE)
(86) Internationale Anmeldenummer: DE9300720
(87) Internationale Veröffentlichungsnummer: WO9406077

(56) Entgegenhaltungen:
- EP-A- 0 497 029
- US-A- 4 694 416
- US-A- 4 829 380
- IEEE SOUTHEASTCON '87 Bd. 1 , 5. August 1987 , TAMPA, USA Seiten 225 - 228 M. C. ERTEM 'A reconfigurable co-processor for microprocessor systems'
- IEEE 1990 CUSTOM INTEGRATED CIRCUITS CONFERENCE Mai 1990 Seiten 3141 - 3144 N. HASTIE AND R. CLIFF 'The implementation of hardware subroutines on field programmable gate arrays'
- IEEE 1987 CUSTOM INTEGRATED CIRCUITS CONFERENCE Juli 1987 Seiten 149 - 152 J. ROWSON ET AL 'A datapath compiler for standard cells and gate arrays'

## Beschreibung

Rechnersystem mit mindestens einem Mikroprozessor und mindestens einem Coprozessor und Verfahren zu dessen Betrieb

Zur Lösung rechenaufwendiger Aufgaben werden zur Unterstützung von Mikroprozessoren parallel arbeitende Hardware-Rechenbausteine, sog. Coprozessoren, eingesetzt. Diese sind fest verdrahtet und in ihrer Hardware-Beschaffenheit software-technisch nicht variabel. Ein typisches Rechnungssystem besteht dabei aus einem als CPU-arbeitenden Mikroprozessor und einem Coprozessor, der mit dem Mikroprozessor verbunden ist. Mikroprozessor und Coprozessor arbeiten bei der Ausführung z.B. eines Anwenderprogramms so zusammen, daß bei Bearbeitung eines Befehles, der vom Coprozessor ausführbar ist, der Mikroprozessor über eine direkte Verbindung den Coprozessor anstößt. Sodann arbeiten Mikroprozessor und Coprozessor parallel weiter, bis das Ergebnis des Coprozessors vorliegt. Dieses Ergebnis wird dann an den Mikroprozessor übertragen. Mikroprozessor und Coprozessor kommunizieren somit über eine genau definierte Schnittstelle. Die Hardware des Coprozessors und die damit verbundene Funktionalität ist vorgegeben. Eine Erhöhung der Rechenleistung wird dabei durch Hardware erreicht, welche für eine bestimmte Aufgabe entworfen wurde. Solche handelsüblichen Arithmetikprozessoren findet man z.B. in Heimcomputern, ein Beispiel davon ist in U.Tietze, Ch.Schenk, Halbleiterschaltungstechnik, 9. Auflage, Seite 707 bis 715 beschrieben.

Ein rekonfigurierbarer sequentieller Prozessor zur Verarbeitung von Bilddaten wird in EP-A- 0497029 beschrieben. Mit Hilfe von Konfigurationsdateien wird eine arithmetische Einheit mit mehreren für die Ausführung eines bestimmten Algorithmus notwendigen Hardware - Bausteinen gekoppelt.

Ein aus mehreren Modulen aufgebauter Coprozessor wird in Ertem, M.C. "A reconfigurable co-processor for microprocessor systems" Proceedings of the Southeastcon, IEEE SOUTHEASTCON'87, Seiten 225-228 dargestellt. Die einzelnen Module werden durch den Hauptprozessor mikroprogrammiert.

Die der Erfindung zugrundeliegende Aufgabe besteht nun darin, ein Rechensystem, welches aus Mikroprozessoren und mindestens einem Coprozessor besteht, so zu verbessern, daß die Funktion des Coprozessors entsprechend dem gerade zu bearbeitenden Anwenderprogramm konfigurierbar ist. Diese Aufgabe wird gemäß den Merkmalen des Patentanspruchs 1 gelöst.

Die Leistungsfähigkeit des Coprozessors wird erfindungs-gemäß somit dadurch erhöht, daß die Hardware-Struktur aus einer Mehrzahl von Funktionseinheiten aufgebaut ist, von denen jede zur Ausführung einer Funktion spezialisiert ist. Somit ist der Coprozessor je nach Aufgabenstellung einstellbar. Vorteilhafterweise läßt sich zu jedem Zeitpunkt eine für die Lösung des Problems besonders gut geeignete Coprozessor-Hardware einstellen. Der konfigurierte Coprozessor wird vom Mikroprozessor ganz normal wie ein standardmäßiger Coprozessor-Baustein angesprochen und verwaltet. Deshalb kann ein entsprechend aufgebauter software-konfigurierter Coprozessor ohne Eingriff in ein bestehendes Mikroprozessor basiertes Rechnersystem an der Stelle eines Standard-Coprozessor eingesetzt werden. Alle Aufrufe und Ansteuersequenzen bleiben davon, abgesehen von der zusätzlichen Initialisierung für die vom einstellbaren Coprozessor auszuführende Funktion, unberührt.

Es ist dabei vorteilhaft, daß ein oder mehrere derartige Coprozessoren entsprechend einem auszuführenden Anwenderprogramm einstellbar oder konfigurierbar sind. Erfindungsgemäß kann bei der Compilierung eines Anwenderprogrammes festgestellt werden, welche Sequenzen im Anwenderprogramm häufiger vorkommen und daher zur Beschleunigung der Bearbeitung durch einen Coprozessor ausführbar sein sollen. Für derartig festgestellte Sequenzen, die z.B. arithmetische Operationen sein können, werden dann die im Rechnersystem vorhandenen Coprozessoren konfiguriert und dann an der Stelle des Programms, an der die Bearbeitung der entsprechenden Sequenz beginnt, die Ausführung diesem Coprozessor übergeben. Dazu ist es zweckmäßig, daß z.B. in einer Bibliothek für verschiedene von einem Coprozessor auszuführende Funktionen ein vorgefertigter Konfigurationscode enthalten ist, der dann in den Programmcode eingebracht wird, also zum laufenden Programm gebunden wird.

Anhand eines Ausführungsbeispieles, das in den Figuren dargestellt ist, wird die Erfindung weiter erläutert. Es zeigen
- Figur 1: ein Rechnersystem bestehend aus einem Mikroprozessor und einem Coprozessor,
- Figur 2: ein Beispiel eines konfigurierbaren Coprozessors.

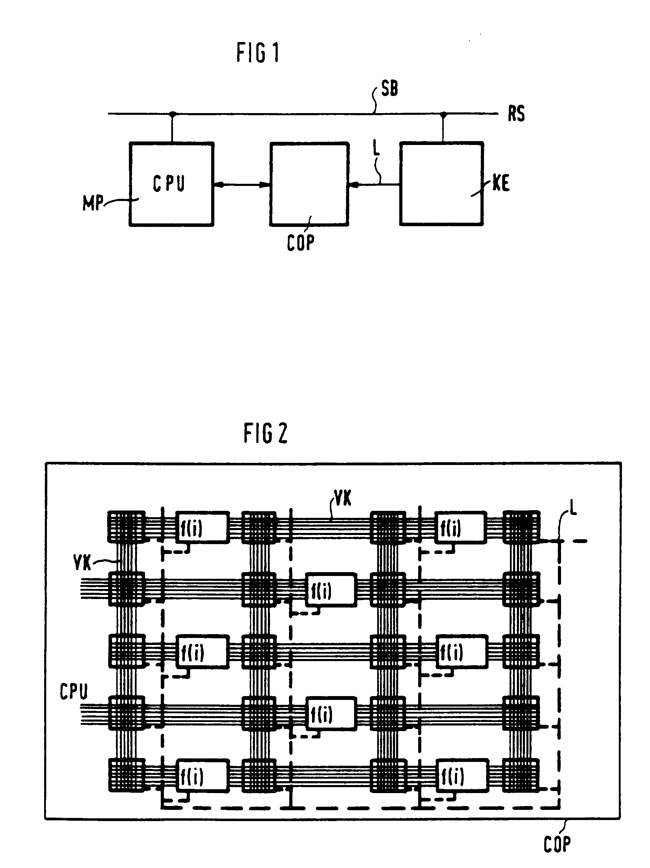

Nach Figur 1 besteht ein Rechnersystem RS aus einem Mikroprozessor MP, der die Funktionen einer Zentraleinheit eines Rechners hat, einem Coprozessor COP, einer Konfigurationseinheit KE und einem Systembus SB. Der Mikroprozessor MP ist mit dem Coprozessor COP verbunden. Bei der Verarbeitung eines Programms initialisiert der Mikroprozessor den Coprozessor COP, wenn dieser eine Funktion ausführen soll, für die er spezialisiert ist. Mikroprozessor MP und Coprozessor COP arbeiten dann parallel, bis der Coprozessor COP seine Funktion ausgeführt hat. Das Ergebnis gibt dann der Coprozessor an den Mikroprozessor MP.

Der Coprozessor COP kann gemäß Figur 2 hardwäremäßig so ausgeführt sein, daß die von ihm auszuführende Funktion erst dann eingestellt oder konfiguriert wird, wenn das zu bearbeitende Programm compiliert wird. Dann nämlich ist feststellbar, welche Befehlssequenzen von einem Coprozessor ausführbar sind und welche nicht. Um nun den Coprozessor COP entsprechend zu konfigurieren, ist eine Einheit KE vorhanden, die über den Systembus SB mit dem Mikroprozessor MP verbunden ist. Über den Systembus SB wird der Konfigurationseinheit KE nach der Compilierung des zu bearbeitenden Programms mitgeteilt, welche Funktion vom Coprozessor COP auzuführen ist. Dementsprechend wird dieser eingestellt.

Figur 2 zeigt einen solchen konfigurierbaren Coprozessor. Konfigurierbare Bausteine, die für diesen Zweck verwendbar sind, sind bereits bekannt und werden unter den Begriff programmierbarer Gate-Array vertrieben. Sie bestehen aus Funktionseinheiten F(I), die jeweils eine Funktion ausführen können. Wenn feststeht, welche Funktionen von dem Coprozessor COP bearbeitet werden soll, dann kann die entsprechende Funktionseinheit F(i) von der Konfigurationseinheit KE über die Leitung L ausgewählt werden und über Verdrahtungskanäle VK mit dem Mikroprozessor MP verbunden werden. Die Konfigurierung, also die Auswahl einer der Funktionseinheiten F(i), wird von der Konfigurationseinheit KE entsprechend einer von dem Compiler gelieferten Information ausgeführt.

Ein Compiler für diese Zwecke muß zusätzlich zu seinen üblichen Aufgaben während der Übersetzung des Quellprogramms zusätzlichen Konfigurationscode erzeugen. Diese zusätzliche Konfigurationscode, der in das Programm eingefügt wird, wird der Konfigurationseinheit KE zugeführt, die dann dementsprechend den Coprozessor COP einstellt. Dies kann auf folgende Weise geschehen: Bei der Übersetzung eines Anwenderprogramms oder Quellprogramms wird gewöhnlich ein Controll-Datenflußgraph erstellt. Ein solcher Graph enthält Knoten, welche abstrakte Operationen, wie z.B. Multiplikation, Addition, Schiebe-oder Spezialoperationen repräsentieren, und Kanten, welche den Kontrollfluß darstellen. Gewöhnlich werden alle abstrakten Operationsknoten und Kanten in Maschinencode übersetzt. Dieses Maschinenprogramm ist dann auf der Zielmaschine ablauffähig.

Knoten und Kanten des Kontroll- und Datenflußgraphen entsprechen somit entweder Grundoperationen in der Programmiersprache oder den Mustern für die Software-Konfiguration spezieller Hardware-Elemente, der Coprozessoren. Da für jede dieser abstrakten Operationen bereits bei der Übersetzung ein Aufwand (Zeit, Komplexität der Hardware-Realisation, usw.) oder Kostenfaktor angegeben werden kann und die Häufigkeit dieser Operationen bekannt ist, lassen sich die Operationen bestimmen, welche von einem Coprozessor unterstüzt oder ausgeführt werden sollen.

Werden die Graphen bezüglich auftretender Sequenzen untersucht, dann ergeben sich unmittelbar die Stücke im Programmablauf, welche durch software-konfigurierbare Elemente unterstüzt werden können. Im einfachsten Fall kopiert man dann für ausgewählte Sequenzen vorgefertigten Konfigurationscode aus einer Bibliothek in den Programmcode ein oder modifiziert bestehende Bibliothekselemente entsprechend.

## Patentansprüche

1. Verfahren zum Betrieb eines aus mindestens einem Mikroprozessor (MP) und Coprozessoren (COP) bestehenden Rechnersystems
bei dem der Coprozessor (COP) aus einer Mehrzahl von Funktionseinheiten (F(i)) aufgebaut ist, von denen jede zur Ausführung einer Funktion spezialisiert ist, bei dem für ein zu bearbeitendes Anwenderprogramm bei dessen Compilierung die Befehlssequenzen festgestellt werden, die mit einem Coprozessor ausführbar sind, bei dem entsprechend der festgestellten Befehlssequenz eine der Funktionseinheiten des Coprozessors ausgewählt wird und mit dem Mikroprozessor (MP) verbunden wird.

2. Verfahren nach Anspruch 1,
bei dem zur Konfigurierung des Coprozessors (COP) vom Compiler in das übersetzte Programm Konfigurationscode eingefügt wird, mit dem die Konfiguration des Coprozessors während des Ablaufs des Programms veranlaßt wird.

## Claims

1. Method of operating a computer system comprising at least one microprocessor (MP) and coprocessors (COP), in which the coprocessor (COP) is made up of a plurality of functional units (F(i)), each of which is specialized for the execution of a function, in which, for a user program to be processed, the command sequences which can be executed by a coprocessor are established during the compiling of said program, and in which, according to the established command sequence, one of the functional units of the coprocessor is selected and connected to the microprocessor (MP).

2. Method according to Claim 1, in which, for the configuring of the coprocessor (COP), there is inserted by the compiler into the compiled program a configuration code by which the configuration of the coprocessor is initiated during the running of the program.

## Revendications

1. Méthode de fonctionnement d'un système informatique comportant au moins un microprocesseur (MP) et au moins un coprocesseur (COP) pour laquelle le coprocesseur (COP) est conçu d'un grand nombre d'unités fonctionnelles (F(i)), chacune étant spécialisée dans l'exécution d'une fonction, pour laquelle il convient de déterminer les séquences d'instructions de la compilation d'un programme d'utilisateur à traiter, exécutables avec un coprocesseur et pour laquelle l'une des unités fonctionnelles du coprocesseur est sélectionnée en fonction de la séquence d'instructions identifiée et est reliée au microprocesseur (MP).

2. Méthode selon la revendication 1 pour laquelle dans le but de configurer le coprocesseur (COP), on introduit dans le programme traduit, à partir du compilateur, un code de configuration avec lequel la configuration du coprocesseur sera mise en oeuvre pendant le déroulement du programme.
